# FASCICULE DE BREVET EUROPEEN

(11) **EP 3 085 035 B1**
(45) Date de publication et mention de la délivrance du brevet: **13.03.2019**
(21) Numéro de dépôt: 14827848.4
(22) Date de dépôt: 16.12.2014
(51) Int. Cl.: H04L 12/801, H04L 12/851

(54) **TECHNIQUE DE SIGNALISATION D'UNE CONGESTION DANS UN RÉSEAU DE COMMUNICATION PAR PAQUETS**
VERFAHREN ZUR SIGNALISIERUNGSANSAMMLUNG IN EINEM PAKETKOMMUNIKATIONSNETZ
TECHNIQUE FOR SIGNALLING CONGESTION IN A PACKET COMMUNICATION NETWORK

(30) Priorité: 20.12.2013 FR 1363336
(43) Date de publication de la demande: 26.10.2016
(73) Titulaire: Orange, 75015 Paris (FR)
(72) Inventeur: ELLOUZE, Selim, 94000 Créteil (FR); STEPHAN, Emile, F-22560 Pleumeur Bodou (FR); MARJOU,Xavier, F-22300 Lannion (FR)
(86) Numéro de dépôt international: PCT/FR2014/053362
(87) Numéro de publication internationale: WO 2015/092260

(56) Documents cités:
- WO-A1-2007/064976
- US-A1- 2006 092 836
- US-A1- 2009 285 099
- C Chrysostomou ET AL: "Differentiated Services Congestion Control in TCP/IP Networks using Fuzzy Logic", , 6 juillet 2006 (2006-07-06), XP055153693, Extrait de l'Internet: URL:http://www.cs.ucy.ac.cy/ResearchLabs/n etrl/papers/files/chrysostomou-ISYC06.pdf [extrait le 2014-11-18]
- RAMAKRISHNAN TERAOPTIC NETWORKS S FLOYD ACIRI D BLACK EMC K: "The Addition of Explicit Congestion Notification (ECN) to IP; rfc3168.txt", 20010901, 1 septembre 2001 (2001-09-01), XP015008949, ISSN: 0000-0003

## Description

L'invention se situe dans le domaine des réseaux de communication par paquets et concerne plus particulièrement une technique de signalisation d'une congestion par un noeud dans un réseau de communication à un autre noeud de ce réseau.

Une congestion est susceptible de se produire sur tout équipement situé sur le chemin emprunté par un paquet. Plus précisément, un équipement peut être congestionné au niveau de mémoires d'entrée ou de sortie, de files d'attente internes, etc.

Des fonctions de notification de congestion ont été définies par les organismes de normalisation pour les réseaux de communication par paquets. Ces fonctions reposent sur divers mécanismes, parmi lesquels on peut citer un mécanisme de notification explicite de congestion ECN, pour « Explicit Congestion Notification », un mécanisme de notification explicite de congestion vers l'avant FECN, pour « Forward Explicit Congestion Notification », un mécanisme de notification explicite de congestion vers l'arrière BECN, pour « Backward Explicit Congestion Notification » ou bien encore des combinaisons de ces différents mécanismes. Le terme « avant » correspond au sens de transmission d'un paquet, c'est-à-dire vers le destinataire du paquet, et le terme « arrière » correspond au sens opposé de transmission du paquet, c'est-à-dire vers l'émetteur du paquet. Ces différents mécanismes utilisent un champ de l'entête des paquets de données pour porter une information relative à la congestion d'un des noeuds acheminant le paquet. Ainsi, cette information relative à la congestion est transmise dans un plan de transfert relatif au transport des données. Par exemple, pour un réseau de communication par paquets de type IP, pour « Internet Protocol », le document de l'IETF, pour « Internet Engineering Task Force », RFC 3168 spécifie la manière dont un paquet IP porte une notification explicite de congestion ECN en avant. On appelle par la suite un tel paquet IP un paquet marqué.

Ces mécanismes de notification explicite présentent cependant certains inconvénients. Une fois marqué un paquet doit parvenir à son destinataire pour que l'information relative à la congestion puisse être renvoyée à l'émetteur à l'aide par exemple d'un acquittement, lorsque le mécanisme de notification est mis en oeuvre avec le protocole TCP, pour « Transmission Control Protocol » tel que défini dans un document de l'IETF RFC 5562. Cela induit un retard dans la signalisation de la congestion à l'émetteur et ainsi de son traitement. Cela a également pour conséquence de retarder une prise de mesures de prévention ou de résolution de la congestion par l'émetteur. En outre le marquage avec l'information relative à la congestion est réalisé selon des méthodes statistiques. Les paquets à marquer sont choisis parmi l'ensemble des paquets acheminés par la file d'attente rencontrant la situation de congestion. Or une congestion peut être liée à plusieurs flux, à la totalité des flux acheminé par un noeud ou encore être le fait d'un seul flux. Il est par ailleurs qu'une congestion est susceptible de provoquer une détérioration de la qualité de service. Cette détérioration se traduit par exemple par une perte de paquets de données, ou par une augmentation du temps de latence relatif à l'envoi des paquets de données d'un noeud émetteur à un noeud destinataire. Une congestion est par exemple détectée par l'atteinte d'un seuil dans une file d'attente où sont mémorisés des paquets en entrée ou sortie d'un noeud du réseau. Selon la valeur de ce seuil on parlera de pré-congestion ou de congestion. Par la suite les termes « congestion » et « pré-congestion » seront indifféremment utilisés. L'expression « information de congestion » également utilisée par la suite fait référence à une information indiquant l'existence d'une congestion. Un exemple d'architecture de réseau permettant la signalisation d'une information de congestion est décrite dans le document "Differentiated Services Congestion Control in TCP/IP Networks using Fuzzy Logic", XP055153693, qui met en oeuvre les techniques de "DiffServ" permettant de détecter une congestion, suivi d'un marquage des paquets par ECN.

Un des buts de l'invention est de remédier à des insuffisances/inconvénients de l'état de la technique et/ou d'y apporter des améliorations.

Selon un premier aspect, l'invention a pour objet un procédé de signalisation d'une information de congestion relative à un premier flux de données émis par un premier noeud dans un réseau, le procédé comprenant les étapes suivantes mises en oeuvre par un deuxième noeud par l'intermédiaire duquel le premier flux de données et au moins un deuxième flux de données sont acheminés :
- obtention d'une information de congestion relative au deuxième flux de données, l'information de congestion indiquant qu'un troisième noeud par l'intermédiaire duquel le premier flux de données est acheminé a détecté une situation de congestion pour un acheminement du deuxième flux dans un plan de transfert des données ;
- vérification que le premier flux de données présente un niveau de priorité inférieur à celui du deuxième flux de données ;
- envoi au premier noeud émetteur du premier flux, d'un message de contrôle dans un plan de commande, le message de contrôle portant l'information de congestion.

Le procédé de signalisation permet ainsi à un noeud d'un réseau de redistribuer une information de congestion relative à un flux vers l'émetteur d'un autre flux. L'émetteur peut sur réception d'une telle signalisation prendre des mesures afin de prévenir ou de résoudre la congestion. Ces mesures consistent par exemple à réduire le débit du flux émis. Le procédé permet ainsi de privilégier l'acheminement de flux prioritaires en signalant à un émetteur une congestion relative à un flux particulier. Le procédé permet par exemple de signaler la congestion à un émetteur pour lequel une réduction du débit du flux émis aura pour effet de libérer des ressources du réseau pour les autres flux. C'est par exemple le cas d'un flux FTP, pour « File Transfer Protocol », dont la réduction du débit d'émission des paquets de données a simplement pour effet pour un utilisateur de différer l'instant de livraison d'un fichier de données. La qualité de service relative à l'acheminement des paquets de données appartenant à des flux prioritaires (e.g. flux vidéo ou audio temps réel), ainsi que la qualité d'expérience perçue par les utilisateurs d'un service fourni par l'intermédiaire de ces flux sont ainsi préservées. Il est également souligné que l'obtention de l'information de congestion étant mise en oeuvre par un noeud quelconque du réseau par l'intermédiaire duquel le premier et deuxième flux sont acheminés, l'information de congestion ne nécessite pas de parvenir à l'un des noeuds destinataires de ces flux pour être envoyée vers l'émetteur du premier flux. Un gain de temps dans la prise en charge de la prévention ou de la résolution de la congestion est obtenu. Le risque de perte de l'information de congestion est en outre diminué. Ceci est d'autant plus vrai que le deuxième noeud se situe à proximité du noeud ayant détecté la congestion. Le procédé offre ainsi des moyens rapides de prévention ou de résolution d'une congestion par priorisation des flux passant par un noeud congestionné.

Le plan de commande permet aux noeuds du réseau de s'échanger des messages de contrôle pour notamment veiller au bon fonctionnement du plan de transfert. L'envoi de l'information de congestion dans le plan de commande permet un acheminement de l'information de congestion vers le premier noeud sans surcharger les ressources du réseau utilisées pour le transport des données, du fait notamment d'une fréquence moindre pour l'envoi des messages de contrôle en comparaison des échanges dans le plan de transfert des données. Prévenir une surcharge des ressources du réseau revêt un caractère particulièrement important dans un contexte de congestion où ces ressources peuvent rapidement devenir précaires. L'envoi de l'information de congestion dans un plan de commande assure par ailleurs au procédé une compatibilité avec l'ensemble des protocoles de transport de données. Son déploiement en est facilité.

Selon une caractéristique particulière, le procédé de signalisation comprend une étape d'obtention d'un identifiant du premier noeud à partir d'un paquet de données appartenant au premier flux.

L'obtention d'un identifiant du premier noeud permet d'adresser directement l'information de congestion à l'émetteur du flux non prioritaire.

Selon une caractéristique particulière, l'information de congestion est obtenue à partir d'un paquet de données appartenant au deuxième flux.

L'obtention de l'information de congestion à partir d'un paquet de données appartenant au deuxième flux permet de récupérer l'information relative à la congestion dans le plan de transfert des données. L'information ainsi obtenue est au plus proche des données et fournit une indication sur un état quasi temps réel de la congestion.

Selon une caractéristique particulière, l'information de congestion est obtenue dans un plan de commande à partir d'un message de contrôle portant l'information de congestion.

L'obtention de l'information de congestion dans un plan de commande à partir d'un message de contrôle permet au deuxième noeud de répondre à la fois à une détection d'une congestion par un noeud A et à la signalisation d'une congestion par un noeud B distinct d'un noeud ayant détecté une congestion. Le deuxième noeud met par exemple en oeuvre le procédé sur obtention d'une information de congestion directement depuis un noeud A du réseau ayant détecté une congestion (e.g. routeur). Le procédé peut également être mis en oeuvre sur obtention de l'information de congestion depuis un message de contrôle émis par un noeud B du réseau afin de signaler une congestion détectée par un noeud C du réseau. Le procédé peut ainsi être adapté à différentes configurations du réseau.

Selon une caractéristique particulière, le procédé de signalisation comprend en outre une étape d'observation après envoi de l'information de congestion, à l'issue de laquelle lorsque la situation de congestion se prolonge au niveau du troisième noeud, les étapes de vérification et d'envoi sont répétées pour un troisième flux émis par un quatrième noeud.

L'étape d'observation permet d'apporter une solution à une situation de congestion qui se prolongerait, en envoyant successivement l'information de congestion aux flux acheminés par le deuxième noeud dans l'ordre du moins prioritaire au plus prioritaire. Un flux prioritaire n'est ainsi impacté que lorsqu'aucune des mesures prises pour des flux moins prioritaires n'a permis de résoudre une situation de congestion.

Selon une caractéristique particulière, lors de l'étape de vérification le niveau de priorité appartient à un groupe comprenant un niveau de priorité associé à un flux de données, un niveau de priorité associé à un émetteur d'un flux de données, un niveau de priorité associé à un utilisateur recevant un flux de données, un niveau de priorité associé à un protocole de communication d'un flux de données, un niveau de priorité associé à une application générant un flux de données.

Différents critères de priorisation peuvent être choisis en fonction par exemple d'une politique mise en oeuvre par un opérateur. Un niveau de priorité associé à un flux de données permet de privilégier certains types de flux, tels que des flux plus sensibles par exemple à une perte de paquets. Un niveau de priorité associé à un utilisateur permet d'offrir une garantie de service à certains profils utilisateurs en priorité. Un niveau de priorité associé à un type de protocole permet par exemple à un opérateur de choisir de mettre en oeuvre une politique de traitement d'une congestion plus ou moins souple, en choisissant par exemple une politique plus souple pour un protocole d'échange de données transactionnel, et plus stricte pour un protocole d'échange de données non transactionnel. Un niveau de priorité associé à un émetteur d'un flux de données permet de privilégier un ensemble de flux émis par un émetteur particulier.

Selon un deuxième aspect, l'invention concerne un noeud dans un réseau, dit « premier noeud », agencé pour signaler une information de congestion relative à un premier flux de données émis par un deuxième noeud, le premier flux de données et au moins un deuxième flux de données étant acheminés par le premier noeud. Ce premier noeud comprend :
- un module de traitement agencé pour obtenir une information de congestion relative au deuxième flux de données, ladite information de congestion indiquant qu'un troisième noeud par l'intermédiaire duquel le premier flux de données est acheminé a détecté une situation de congestion pour un acheminement dudit deuxième flux dans un plan de transfert des données ;
- un module de vérification agencé pour vérifier que le premier flux de données présente un niveau de priorité inférieur à celui du deuxième flux de données ;
- un module de contrôle agencé pour envoyer audit deuxième noeud un message de contrôle dans un plan de commande, ledit message de contrôle portant ladite information de congestion.

Les avantages énoncés pour l'une quelconque des caractéristiques du procédé de signalisation selon le premier aspect sont directement transposables au noeud d'un réseau selon le deuxième aspect.

Selon un troisième aspect, l'invention a pour objet un système de signalisation d'une information de congestion, agencé pour signaler une information de congestion relative à un premier flux de données émis par un premier noeud, le premier flux de données et au moins un deuxième flux de données étant acheminés par un deuxième noeud. Le système comprend :
- le premier noeud, comprenant un module d'envoi agencé pour envoyer des paquets de données via le premier flux, et un module de réception agencé pour recevoir une signalisation d'une information de congestion depuis le deuxième noeud ;
- le deuxième noeud étant agencé selon le deuxième aspect ;
- un troisième noeud par l'intermédiaire duquel le premier flux de données est acheminé, le troisième noeud comprenant un module de marquage agencé pour marquer des paquets de données relatifs à une situation de congestion pour un acheminement dudit deuxième flux dans un plan de transfert des données.

Les avantages énoncés pour l'une quelconque des caractéristiques du procédé de signalisation selon le premier aspect sont directement transposables au système de signalisation selon le troisième aspect.

Selon un quatrième aspect, l'invention concerne également un programme pour un noeud, comprenant des instructions de code de programme destinées à commander l'exécution des étapes du procédé précédemment décrit, lorsque ledit programme est exécuté par ledit noeud et un support d'enregistrement lisible par un noeud sur lequel est enregistré un programme pour un noeud.

L'invention sera mieux comprise à l'aide de la description suivante de modes de réalisation particuliers, en référence aux dessins annexés sur lesquels :
- la figure 1 représente un système de signalisation d'une information de congestion dans un réseau de communication selon un mode particulier de réalisation ;
- la figure 2 représente un schéma synoptique des étapes du procédé de signalisation et des échanges entre noeuds mettant en oeuvre le procédé selon un premier mode particulier de réalisation ;
- la figure 3 représente un schéma synoptique des étapes du procédé de signalisation et des échanges entre noeuds mettant en oeuvre le procédé selon un deuxième mode particulier de réalisation ;
- la figure 4 représente un schéma synoptique des étapes du procédé de signalisation et des échanges entre noeuds mettant en oeuvre le procédé selon un troisième mode particulier de réalisation ;
- la figure 5 représente un schéma synoptique des étapes du procédé de signalisation et des échanges entre noeuds mettant en oeuvre le procédé selon un quatrième mode particulier de réalisation ;
- la figure 6 représente un noeud d'un réseau selon un mode particulier de réalisation.

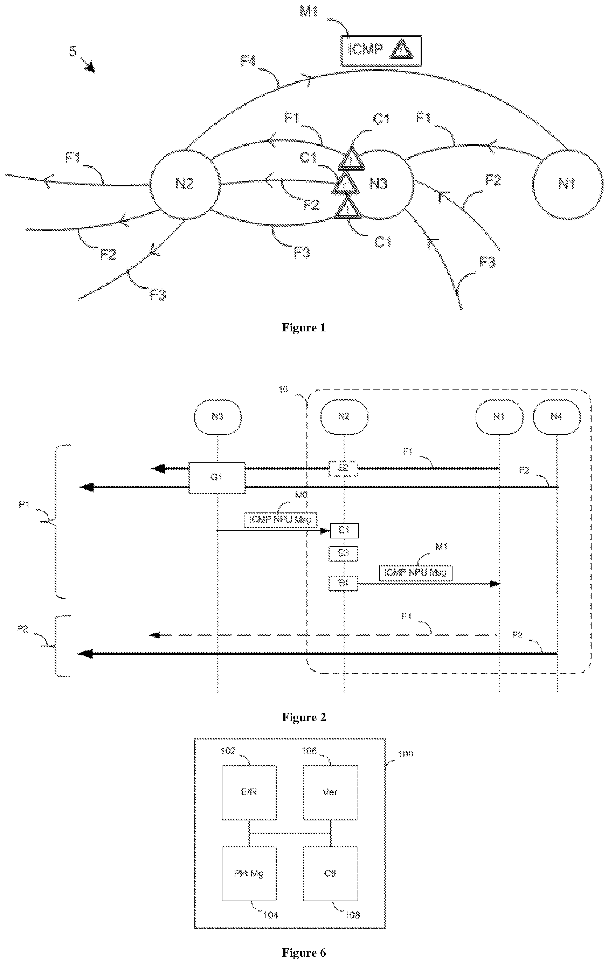

La **figure 1** représente un système de signalisation d'une information de congestion dans un réseau de communication 5 selon un mode particulier de réalisation. Le réseau de communication 5 est en particulier un réseau de communication par paquets. Le système comprend trois noeuds N1, N2 et N3. Un noeud est défini comme un élément intervenant dans une chaîne de service d'un réseau. Il s'agit à titre d'exemple non limitatif d'équipements physiques d'un réseau (e.g. commutateur, routeur, pare-feu, GGSN pour « Gateway GPRS Support Node »), ou encore d'éléments d'un Centre de traitement de données, « Data Center » en anglais (e.g. gestionnaire d'interconnexion ou « DCI manager » en anglais pour « Data Center Interconnection manager », système d'exploitation, contrôleur). A titre d'exemple illustratif, le noeud N1 fournit un service de transfert de fichier, et les noeuds N2 et N3 sont des routeurs.

Les noeuds N2 et N3 acheminent des paquets émis dans un plan, dit plan de transfert. Trois flux F1, F2 et F3, de paquets de données sont représentés. Plus précisément un flux est une suite de paquets transmis entre un noeud émetteur et un noeud destinataire de ces paquets. Les paquets émis par le noeud N1 appartiennent au flux F1, et sont acheminés par les noeuds N2 et N3. Les noeuds N2 et N3 acheminent également les flux F2 et F3. Il n'existe aucune limitation quant au nombre de flux acheminés par les noeuds N2 et N3. Le flux F1 est par exemple un flux FTP pour « File Transfer Protocol », le flux F2 un flux vidéo temps réel et le flux 3 un flux audio temps réel. Dans un autre plan, dit plan de commande, les noeuds s'échangent des informations de contrôle par l'intermédiaire d'un flux de contrôle F4, par exemple à l'aide du protocole ICMP pour « Internet Control Message Protocol », défini dans un document de l'IETF, pour « Internet Engineering Task Force », RFC 792. Les noeuds peuvent également s'échanger des informations de contrôle à partir d'extensions du protocole ICMP (e.g. extension pour le protocole MPLS défini dans le document de l'IETF RFC 4950, extension de ICMP tel que défini dans le document RFC 4884), ou de tout tout autre type de protocole de contrôle équivalent. Il est bien entendu que la connectivité d'un noeud ne se restreint pas au réseau simplifié tel que représenté sur la figure 1. Un noeud est en effet susceptible d'acheminer des paquets vers une pluralité d'autres noeuds.

Lorsqu'un noeud détecte une congestion par exemple au niveau d'une file d'attente destinée à mémoriser les paquets en sortie du noeud avant retransmission vers un autre noeud, les paquets sont marqués par le noeud avant retransmission à l'aide d'un champ d'information ECN, pour « Explicit Congestion Notification ». Il est souligné ici que le marquage est effectué selon des méthodes statistiques, et qu'il n'est donc pas possible de garantir un marquage des paquets pour chacun des flux acheminé par le noeud. Le champ d'information ECN comprend un sous-champ d'information CE, pour « Congestion Experienced ». Les paquets sont ainsi marqués en positionnant le sous-champ d'information CE à la valeur un. A titre d'exemple illustratif, le noeud N3 détecte une congestion C1 sur l'une de ses files d'attente avant retransmission vers le noeud N2, et marque certains paquets appartenant au flux F2.

Le noeud N2 obtient l'information de congestion C1 à réception des paquets marqués appartenant au flux F2. Le noeud N2 vérifie quel est le flux le moins prioritaire parmi les flux F1, F2 et F3. Cette vérification est par exemple faite selon une politique de l'opérateur en association avec certains critères de priorité (e.g. profils utilisateur, protocole de communication utilisé, application générant les flux). A titre d'exemple, le flux le moins prioritaire est le flux F1.

Une fois la priorité des flux F2 et F3 sur le flux F1 vérifiée, cette information est transmise au noeud N1 émetteur du flux F1 dans le flux de contrôle F4 par l'intermédiaire d'un message M1 de contrôle portant l'information de congestion. Ce message M1 est par exemple un message ICMP « Net partially unreachable », extension d'un message ICMP de type « Destination unreachable » tel que défini dans le document de l'IETF RFC 792 afin de signaler une congestion. Un tel message permet en particulier d'indiquer une information relative à la nature de la congestion, notamment en précisant s'il s'agit d'une congestion relative à :
- un ou plusieurs éléments du réseau transportant des paquets (i.e. message ICMP « Network partially unreachable ») ;
- une machine (i.e. message ICMP « Host partially unreachable » indiquant par exemple que des ressources arrivent à saturation, ou un état de charge d'une batterie très faible) ;
- un service particulier (i.e. message ICMP « Port partially unreachable ») ;
- un protocole (i.e. message ICMP « Protocol partially unreachable »).

Le noeud N1 reçoit l'information de congestion C1, et peut alors par exemple diminuer le débit d'émission des paquets appartenant au flux F1. La prise en compte de la congestion C1 au niveau du flux F1 permet ainsi de privilégier l'acheminement des flux F2 et F3

Dans le cas où le niveau de priorité des flux F1, F2 et F3 est identique aucun message n'est envoyé par le noeud N2 au noeud N1.

Il est également souligné que dans un mode particulier de réalisation, lorsqu'après un temps d'observation, la situation de congestion persiste, le noeud N2 détermine quel est le flux le moins prioritaire parmi les flux pour lesquels aucun message de contrôle n'a encore été envoyé. Pour cela avant envoi du message M1 de contrôle une temporisation est par exemple activée. Si à l'expiration de cette temporisation, des paquets marqués par le noeud N3 sont toujours obtenus par le noeud N2, ce dernier vérifie quel est le moins prioritaire des flux F2 et F3. A titre d'exemple selon la politique de l'opérateur mise en oeuvre par le noeud N2, le flux F3 est moins prioritaire que le flux F2. De même que précédemment décrit, un nouveau message de contrôle est alors émis à destination du noeud émetteur du flux F2. Si la temporisation n'a pas expiré, elle est désactivée lorsque le noeud N2 n'observe plus de paquets marqués par le noeud N3.

Dans un autre mode de réalisation le noeud N1 est un serveur VPN pour « Virtual Private Network », permettant d'injecter des paquets de données d'un réseau local dans le flux F1.

La **figure 2** représente de façon schématique les étapes du procédé de signalisation mises en oeuvre selon un premier mode particulier de réalisation.

Dans ce premier mode particulier de réalisation, les noeuds N1, N2 et N4 sont par exemple des éléments d'un centre de traitement de données 10, et le noeud N3 un routeur localisé dans un réseau extérieur. Toujours à titre d'exemple illustratif, le noeud N1 fournit un service de sauvegarde de données, le noeud N2 est un routeur d'interconnexion avec le réseau extérieur, et le noeud N4 fournit un service de vidéosurveillance temps réel. Deux flux F1-F2 émis respectivement par le noeud N1 et le noeud N4 sont acheminés vers l'extérieur du centre de traitement de données 10, en passant notamment par les noeuds N2 et N3. Dans une première phase P1, les paquets émis sur ces flux sont émis à des débits standards d'émission en l'absence de congestion constatée, puis un noeud émetteur de l'un de ces flux reçoit une signalisation d'une information de congestion et réduit son débit d'émission dans une phase P2.

Dans ce mode de réalisation une congestion est détectée dans le réseau extérieur par le noeud N3. L'information de congestion est ensuite transmise du réseau extérieur au centre de traitement de données par le noeud N3 qui la signale au noeud N2.

Dans une étape E1, le noeud N2 reçoit une signalisation d'une information de congestion depuis le noeud N3 ayant détecté une congestion (G1). L'information de congestion est ainsi obtenue par le noeud N2 à partir d'un message de contrôle ICMP. Ce message ICMP est par exemple un message ICMP « Net partially unreachable » M0. Le message M0 porte également l'information de congestion relative à la congestion détectée par le noeud N3. Cela se traduit par exemple par une encapsulation d'un entête d'un paquet appartenant au flux F2 marqué à l'aide de champs ECN.

Lors d'une étape E2, le noeud N2 extrait un identifiant du noeud N1 à partir d'un entête d'un des paquets appartenant au flux F1. Cet identifiant correspond plus précisément à une adresse dans le réseau et à un numéro de port du noeud N1.

Dans une étape E3, le noeud N2 vérifie que le flux F1 a un niveau de priorité inférieur à celui du flux F2. Pour cela le noeud N2 détermine le type de la congestion à partir de l'information de congestion contenue dans le message M0 de contrôle reçu à l'étape E1. Le message ICMP « Net partially unreachable » M0 indique que la congestion est relative à un ou plusieurs équipements du réseau, par exemple la saturation d'une file d'attente en sortie du noeud N3. Une information de classe de service contenue dans l'entête des paquets appartenant au flux F1 et F2, permet par exemple au noeud N2 de déterminer la politique à mettre en oeuvre pour le niveau de priorité de chacun des deux flux. L'information de classe de service est par exemple obtenue grâce au champ ToS pour « Type of Service » des entêtes de paquets IP. Cette dernière information peut également être obtenue grâce au champ DSCP pour « Differentiated Services Code Point », lorsqu'un mécanisme de type DiffServ pour « Differenciated Services » de traitement différencié des paquets tel que défini par les documents de l'IETF RFC 2474 et RFC 2475 est mis en oeuvre dans le réseau. A titre d'exemple, pour quatre classes de service définies par le champ DSCP notées de 1 à 4, un paquet de classe de service 1 bénéficie d'un niveau de priorité le plus élevé ; un paquet de classe de service 4 bénéficie d'un niveau de priorité le plus faible. Il est supposé ici que les paquets appartenant aux flux F1 et F2 ont respectivement un niveau de priorité défini à 1 et à 3.

Ayant vérifié que le niveau de priorité du flux F1 est inférieur à celui du flux F2, le noeud 2 prépare un message de contrôle ICMP « Net partially unreachable » M1 dans lequel est recopiée l'information de congestion portée par le message M0, puis l'envoie au noeud N1 lors d'une étape E4.

Le noeud N1 sur réception de la signalisation de l'information de congestion, exécute une action pour tenter de diminuer la congestion, par exemple réduit le débit d'émission des paquets émis sur le flux F1.

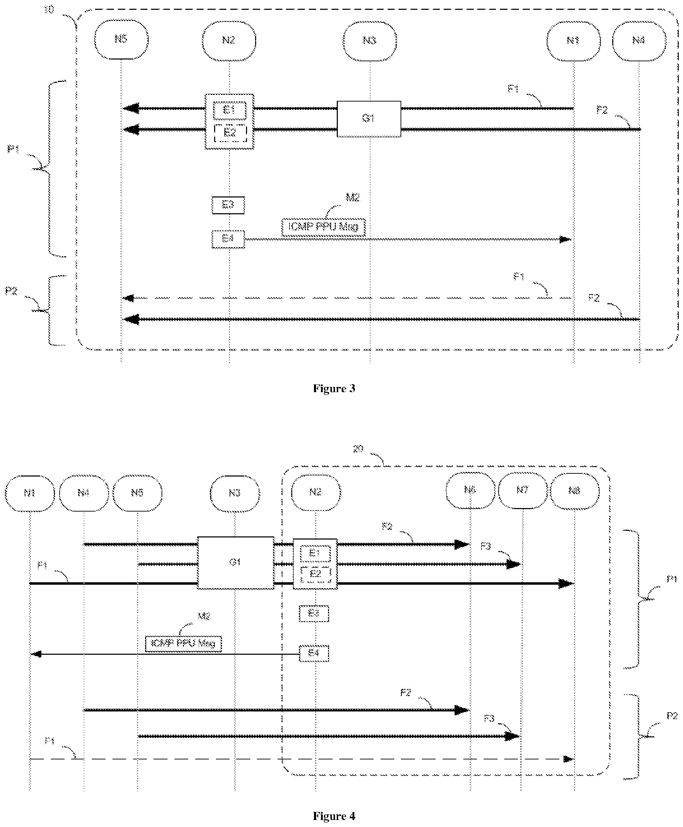

La **figure 3** représente de façon schématique les étapes du procédé de signalisation mises en oeuvre selon un deuxième mode particulier de réalisation.

Dans ce deuxième mode particulier de réalisation, des noeuds N1-N5 font partie d'un centre de traitement de données 10. Le noeud N1 fournit un service de sauvegarde de données, le noeud N2 est un système d'exploitation hébergeant un service de stockage fournit par le noeud N5, le noeud N3 un routeur, et le noeud N4 fournit un service de vidéosurveillance temps réel. Les noeuds N1 et N4 sont en concurrence pour l'utilisation de ressources de stockage fournies par le noeud N5. Deux flux F1 et F2 émis respectivement par le noeud N1 et le noeud N4 sont acheminés par les noeuds N2 et N3. Dans une première phase P1, les paquets de ces flux sont émis à des débits standards d'émission en l'absence de congestion constatée, puis un noeud émetteur de l'un de ces flux reçoit une signalisation d'une information de congestion et exécute dans une phase P2 une action pour tenter de diminuer la congestion, par exemple une réduction de son débit d'émission.

Dans ce mode de réalisation le procédé est entièrement mis en oeuvre dans un centre de traitement de données 10 par le noeud N2. Une congestion est détectée dans le centre de traitement de données 10 par le noeud N3.

Lors de l'étape E1, le noeud N2 reçoit des paquets marqués appartenant au flux F2 en provenance du noeud N3. Ce marquage résulte par exemple d'une détection (G1) par le noeud N3 de la congestion indiquant un début de saturation au niveau de ses files d'attente. Le marquage utilise typiquement le mécanisme de notification ECN précédemment décrit, et constitue une information de congestion relative à titre d'exemple au flux F2.

Lors de l'étape E2, le noeud N2 extrait un identifiant du service fourni par le noeud N1 à partir d'un des paquets de données émis sur le flux F1. Cet identifiant correspond en particulier à une adresse réseau et à un numéro de port utilisé par ce service.

Lors de l'étape E3, le noeud N2 vérifie que le flux F1 a un niveau de priorité inférieur à celui du flux F2. Selon une politique de priorisation des services fournie par l'opérateur du réseau, le service fourni par le noeud N4 est prioritaire par rapport au service fourni par le noeud N1, quant à l'accès au service représenté par le noeud N5. L'information de congestion reçue pour le flux F2 émis par le noeud N4 est alors traduite en un message de contrôle ICMP « Port partially unreachable » M2 comportant le numéro de port du service fourni par le noeud N1 (extrait lors de l'étape E2).

Le message de contrôle M2 est ensuite envoyé lors de l'étape E4 à destination du noeud N1. Plus précisément le message M2 est reçu du système d'exploitation hébergeant le service fourni par le noeud N1. Ce dernier détermine à partir du numéro de port contenu dans le message, le service pour lequel une action pour tenter de diminuer la congestion peut être prise, et informe ce service. Le service fourni par le noeud N1 est par exemple informé qu'il doit réduire son débit d'émission de paquets par une alerte d'une interface de programmation (ou API pour « Application Programming Interface »). Le noeud N1 réduit alors le débit du flux émis F1.

La **figure 4** représente de façon schématique les étapes du procédé de signalisation mises en oeuvre selon un troisième mode particulier de réalisation.

Dans ce troisième mode particulier de réalisation, les noeuds N2, N6, N7 et N8 font partie d'un réseau domestique 20. Le noeud N2 est un modem-routeur, par exemple une Livebox, interface entre le réseau domestique 20 et un réseau extérieur. Le noeud N6 met en oeuvre une session de visioconférence, le noeud N7 met en oeuvre une session de lecture en continu ou « streaming » en anglais, et le noeud N8 met en oeuvre une session FTP. Les noeuds N6, N7 et N8 sont par exemple des terminaux. La session de visioconférence (mise en oeuvre par le noeud N6) est associée à un service de visioconférence fourni par un noeud N4, la session de lecture en continu (mise en oeuvre par le noeud N7) est associée à un service de lecture en continu fourni par un noeud N5, et la session FTP (mise en oeuvre par le noeud N8) est associée à un service FTP fourni par un noeud N1. Ces trois services provenant d'un réseau distinct du réseau domestique 20. Trois flux F1, F2, et F3 d'émetteurs respectifs N1, N4 et N5, sont acheminés par les noeuds N2 et N3 à destination respectivement des noeuds N8, N6 et N7. Dans une première phase P1, les paquets émis sur ces flux sont émis à des débits standards d'émission en l'absence de congestion constatée, puis un noeud émetteur de l'un de ces flux reçoit une signalisation d'une information de congestion et exécute une action pour tenter de diminuer la congestion dans une phase P2.

Dans ce mode de réalisation le procédé est mis en oeuvre par le noeud N2 localisé dans un réseau domestique 20. Une congestion est détectée dans le réseau extérieur par le noeud N3. L'information de congestion est transmise au noeud N2 par l'intermédiaire de paquets marqués dans le plan de transfert de données.

Lors de l'étape E1, le noeud N2 reçoit des paquets marqués appartenant à un ou plusieurs flux F1-F3 en provenance du noeud N3. Ce marquage de même que décrit précédemment pour le deuxième mode de réalisation résulte par exemple d'une détection (G1) par le noeud N3 d'une congestion indiquant un début de saturation au niveau de ses files d'attente, et utilise le mécanisme de notification ECN.

Lors de l'étape E2, le noeud N2 extrait un identifiant pour chacun des services fournis par les noeuds N1, N4 et N5 à partir des paquets de données émis sur leurs flux respectifs F1, F2 et F3. Cet identifiant consiste en une adresse réseau et un numéro de port.

Lors de l'étape E3, le noeud N2 vérifie la priorité relative de chacun des flux par rapport aux autres flux, et détermine en particulier que le flux le moins prioritaire est le flux F1. Cette priorisation est par exemple le résultat d'une politique de l'opérateur favorisant les flux temps réel.

Toujours lors de l'étape E3, l'information de congestion obtenue depuis les paquets marqués (étape El) est alors traduite par le noeud N2 en un message de contrôle ICMP « Port partially unreachable » M2 comportant le numéro de port source du service fourni par le noeud N1.

Le message de contrôle M2 est ensuite directement envoyé lors de l'étape E4 au noeud N1 à l'aide de l'adresse et du port du service FTP associés à ce dernier. L'information de congestion des paquets de données marqués est par ailleurs ignorée par le système d'exploitation hébergeant les services de visioconférence, de lecture en continu et FTP (respectivement noeud N6, N7 et N8) afin de ne pas perturber la qualité de service des sessions de visioconférence et de streaming.

A réception du message de contrôle M2, le noeud N1 réduit le débit d'émission des paquets envoyés dans le flux F1.

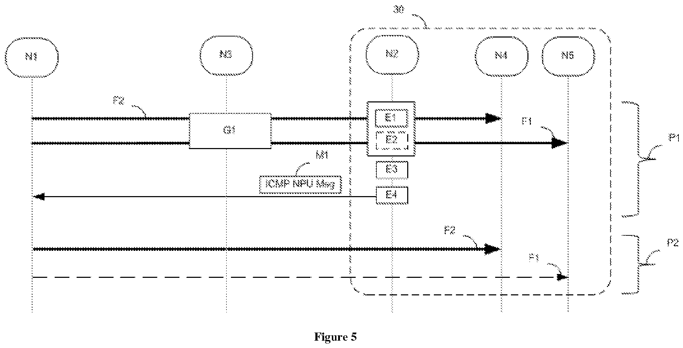

La **figure 5** représente de façon schématique les étapes du procédé de signalisation mises en oeuvre selon un quatrième mode particulier de réalisation.

Dans ce quatrième mode particulier de réalisation, les noeuds N2, N4 et N5 font partie d'un réseau mobile 30. Le noeud N2 est par exemple un équipement GGSN, le noeud N4 un terminal abonné à des services premium, et le noeud N5 un terminal abonné à des services non premium. Le noeud N2 fait office de passerelle entre le réseau mobile 10 et un réseau extérieur IP auquel appartiennent les noeuds N1 et N3. Le noeud N1 fournit un service de lecture en continu et le noeud N3 est un routeur. Les mobiles représentés par les noeuds N4 et N5 accèdent tous les deux au service de lecture en continu fourni par le noeud N1. Les flux F1 et F2 à destination respectivement du noeud N5 et du noeud N4, sont émis par un même émetteur, le noeud N1. Ils sont acheminés par l'intermédiaire des noeuds N2 et N3. Dans une première phase P1, les paquets émis sur ces flux sont émis à des débits standards d'émission en l'absence de congestion constatée, puis un noeud émetteur de l'un de ces flux reçoit une signalisation d'une information de congestion et exécute une action pour tenter de diminuer la congestion dans une phase P2.

Dans ce mode de réalisation le procédé est mis en oeuvre par le noeud N2 dans un réseau mobile 30. Une congestion est détectée (G1) dans le réseau extérieur IP par le noeud N3. L'information de congestion est transmise au noeud N2 par l'intermédiaire de paquets marqués dans le plan de transfert de données.

Lors de l'étape E1, le noeud N2 reçoit des paquets marqués appartenant aux flux F1 et/ou F2 en provenance du noeud N3. Ce marquage de même que décrit précédemment pour le deuxième mode de réalisation résulte par exemple d'une détection (G1) par le noeud N3 d'une congestion indiquant un début de saturation au niveau de ses files d'attente, et utilise le mécanisme de notification ECN.

Lors de l'étape E2, le noeud N2 extrait un identifiant du noeud N1 tel qu'une adresse réseau en association avec un numéro de port, ainsi qu'un identifiant pour chacun des mobiles accédant au service représenté par le N1 à partir par exemple d'un contexte PDP pour « Packet Data Protocol » associé à chacun des flux F1 et F2.

Lors de l'étape E3, le noeud N2 vérifie la priorité relative de chacun des flux par rapport aux autres flux. La priorité des flux est déterminée à partir des profils utilisateurs associés aux noeuds N4 et N5. Ces profils utilisateurs sont par exemple récupérés par le noeud N2 par interrogation d'un équipement HLR pour « Home Location Register ». En particulier l'équipement HLR est localisé dans le réseau mobile 30 lorsque le profil utilisateur à récupérer est celui d'un abonné de l'opérateur du réseau 30. Si le profil utilisateur à récupérer n'est pas celui d'un abonné de l'opérateur de réseau 30, l'équipement HLR interrogé est localisé dans un réseau d'un opérateur auprès duquel l'utilisateur est un abonné. Le noeud N2 détermine à partir des profils utilisateurs obtenus que le flux F1 est moins prioritaire que le flux F2, puisqu'associé à un profil d'utilisateur non premium.

Toujours lors de l'étape E3, l'information de congestion obtenue depuis les paquets marqués des flux F1 et F2 (étape E1) est traduite par le noeud N2 en un message de contrôle ICMP « Network partially unreachable » M1 comprenant un identifiant du service et le port utilisé par le noeud N1.

Le message de contrôle M1 est ensuite adressé lors de l'étape E4 à destination du noeud N1. Plus précisément le message M1 est reçu par le système d'exploitation hébergeant le service fourni par le noeud N1. Ce dernier détermine à partir du numéro de port contenu dans le message, le service pour lequel le débit d'émission des paquets émis sur le flux associé doit être réduit, et informe ce service. Le service fourni par le noeud N1 est par exemple informé qu'il doit réduire son débit d'émission de paquets par une alerte d'une interface de programmation (ou API pour « Application Programming Interface »). Le noeud N1 réduit alors le débit du flux émis F1.

Un noeud 100 du réseau va maintenant être décrit en relation avec la **figure 6**. Un tel noeud 100 est notamment agencé pour signaler une information de congestion relative à un premier flux de données émis par un deuxième noeud, le premier flux de données et au moins un deuxième flux de données étant acheminés par le noeud 100. Le noeud 100 comprend notamment :
- un module d'émission et de réception 102, agencé pour émettre et recevoir des paquets dans un plan de transfert ;
- un module 104 de traitement des paquets, agencé pour obtenir une information de congestion relative au deuxième flux de données, l'information de congestion indiquant qu'un troisième noeud par l'intermédiaire duquel le premier flux de données est acheminé a détecté une situation de congestion pour un acheminement du deuxième flux dans le plan de transfert ;
- un module 106 de vérification, agencé pour vérifier que le premier flux de données présente un niveau de priorité inférieur à celui du deuxième flux de données ;
- un module 108 de contrôle, agencé pour échanger avec un autre équipement noeud des informations de contrôle dans le plan de commande.

Le module 102 est également agencé pour traiter des paquets dans le plan de transfert, et notamment pour obtenir à partir d'un paquet, une information relative à une congestion et la l'insérer dans un message de contrôle à émettre par le module de contrôle 106.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 104, 106, et 108 sont agencés pour mettre en oeuvre le procédé de signalisation précédemment décrit. Il s'agit de préférence de modules logiciels comprenant des instructions logicielles pour faire exécuter celles des étapes du procédé de signalisation précédemment décrit, mises en oeuvre par un noeud du réseau. L'invention concerne donc aussi :
- un programme pour un noeud du réseau, comprenant des instructions de code de programme destinées à commander l'exécution des étapes du procédé de signalisation précédemment décrit, lorsque ledit programme est exécuté par ledit noeud ;
- un support d'enregistrement lisible par un noeud sur lequel est enregistré le programme pour un noeud.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de signalisation d'une information de congestion (C1) relative à un premier flux (F1) de données émis par un premier noeud (N1) dans un réseau, ledit procédé comprenant les étapes suivantes mises en oeuvre par un deuxième noeud (N2) par l'intermédiaire duquel le premier flux (F1) de données et au moins un deuxième flux (F2-F3) de données sont acheminés :
- obtention (E1) d'une information de congestion relative au deuxième flux (F2) de données, ladite information de congestion indiquant qu'un troisième noeud (N3) par l'intermédiaire duquel le premier flux de données est acheminé a détecté une situation de congestion pour un acheminement dudit deuxième flux dans un plan de transfert des données ;
- vérification (E3) que le premier flux de données présente un niveau de priorité inférieur à celui du deuxième flux de données, **caractérisé par** un:
- envoi (E4) au premier noeud émetteur du premier flux, d'un message de contrôle (M1-M2) dans un plan de commande, ledit message de contrôle portant ladite information de congestion.

2. Procédé de signalisation selon la revendication 1, comprenant en outre une étape d'obtention (E2) d'un identifiant du premier noeud à partir d'un paquet de données appartenant au premier flux.

3. Procédé de signalisation selon la revendication 1, dans lequel ladite information de congestion est obtenue à partir d'un paquet de données appartenant au deuxième flux.

4. Procédé de signalisation selon la revendication 1, dans lequel ladite information de congestion est obtenue dans un plan de commande à partir d'un message de contrôle portant ladite information de congestion.

5. Procédé de signalisation selon la revendication 1, comprenant en outre une étape d'observation après envoi de l'information de congestion, à l'issue de laquelle lorsque la situation de congestion se prolonge au niveau du troisième noeud, les étapes de vérification et d'envoi sont répétées pour un troisième flux émis par un quatrième noeud.

6. Procédé de signalisation selon la revendication 1, dans lequel le niveau de priorité appartient à un groupe comprenant un niveau de priorité associé à un flux de données, un niveau de priorité associé à un émetteur d'un flux de données, un niveau de priorité associé à un utilisateur recevant un flux de données, un niveau de priorité associé à un protocole de communication d'un flux de données, un niveau de priorité associé à une application générant un flux de données.

7. Noeud (100) dans un réseau, dit « premier noeud », agencé pour signaler une information de congestion relative à un premier flux de données émis par un deuxième noeud, le premier flux de données et au moins un deuxième flux de données étant acheminés par ledit premier noeud, comprenant :
- un module de traitement (104) agencé pour obtenir une information de congestion relative au deuxième flux de données, ladite information de congestion indiquant qu'un troisième noeud par l'intermédiaire duquel le premier flux de données est acheminé a détecté une situation de congestion pour un acheminement dudit deuxième flux dans un plan de transfert des données ;
- un module de vérification (106) agencé pour vérifier que le premier flux de données présente un niveau de priorité inférieur à celui du deuxième flux de données, **caractérisé par**:
- un module de contrôle (108) agencé pour envoyer audit deuxième noeud un message de contrôle dans un plan de commande, ledit message de contrôle portant ladite information de congestion.

8. Système de signalisation d'une information de congestion, agencé pour signaler une information de congestion relative à un premier flux de données émis par un premier noeud (N1), le premier flux de données et au moins un deuxième flux de données étant acheminés par un deuxième noeud (N2), ledit système comprenant :
- ledit premier noeud (N1), comprenant un module d'envoi agencé pour envoyer des paquets de données via ledit premier flux, et un module de réception agencé pour recevoir une signalisation d'une information de congestion depuis ledit deuxième noeud ;
- ledit deuxième noeud (N2) étant agencé selon la revendication 7 ;
- un troisième noeud (N3) par l'intermédiaire duquel le premier flux de données est acheminé, ledit troisième noeud comprenant un module de marquage agencé pour marquer des paquets de données relatifs à une situation de congestion pour un acheminement dudit deuxième flux dans un plan de transfert des données.

9. Programme pour un noeud, comprenant des instructions de code de programme destinées à commander l'exécution des étapes du procédé selon l'une des revendications 1 à 6, lorsque ledit programme est exécuté par ledit noeud.

10. Support d'enregistrement lisible par un noeud sur lequel est enregistré le programme selon la revendication 9.

## Patentansprüche

1. Verfahren zur Signalisierung einer Überlastinformation (C1) in Bezug auf einen ersten Strom (F1) von Daten, der von einem ersten Knoten (N1) in einem Netz gesendet wird, wobei das Verfahren die folgenden Schritte umfasst, die von einem zweiten Knoten (N2) durchgeführt werden, mittels dessen der erste Strom (F1) von Daten und wenigstens ein zweiter Strom (F2-F3) von Daten geleitet werden:
- Gewinnung (E1) einer Überlastinformation in Bezug auf den zweiten Strom (F2) von Daten, wobei die Überlastinformation anzeigt, dass ein dritter Knoten (N3), mittels dessen der erste Datenstrom geleitet wird, eine Überlastsituation für ein Leiten dieses zweiten Stroms in einer Datenübertragungsebene erkannt hat;
- Überprüfung (E3), ob der erste Datenstrom eine Prioritätsebene aufweist, die niedriger als diejenige des zweiten Datenstroms ist, **gekennzeichnet durch**:
- Senden (E4), an den ersten Knoten, der den ersten Strom sendet, einer Steuerungsnachricht (M1-M2) in einer Steuerungsebene, wobei die Steuerungsnachricht die Überlastinformation transportiert.

2. Verfahren zur Signalisierung nach Anspruch 1, welches außerdem einen Schritt der Gewinnung (E2) einer Kennung des ersten Knotens aus einem dem ersten Strom angehörenden Datenpaket umfasst.

3. Verfahren zur Signalisierung nach Anspruch 1, wobei die Überlastinformation aus einem dem zweiten Strom angehörenden Datenpaket gewonnen wird.

4. Verfahren zur Signalisierung nach Anspruch 1, wobei die Überlastinformation in einer Steuerungsebene aus einer Steuerungsnachricht gewonnen wird, die diese Überlastinformation transportiert.

5. Verfahren zur Signalisierung nach Anspruch 1, welches außerdem einen Schritt der Beobachtung nach dem Senden der Überlastinformation umfasst, an dessen Ende, wenn die Überlastsituation am dritten Knoten fortbesteht, die Schritte der Überprüfung und des Sendens für einen dritten Strom wiederholt werden, der von einem vierten Knoten gesendet wird.

6. Verfahren zur Signalisierung nach Anspruch 1, wobei die Prioritätsebene einer Gruppe angehört, die eine Prioritätsebene, die einem Datenstrom zugeordnet ist, eine Prioritätsebene, die einem Sender eines Datenstroms zugeordnet ist, eine Prioritätsebene, die einem einen Datenstrom empfangenden Benutzer zugeordnet ist, eine Prioritätsebene, die einem Kommunikationsprotokoll eines Datenstroms zugeordnet ist, und eine Prioritätsebene, die einer einen Datenstrom erzeugenden Anwendung zugeordnet ist, umfasst.

7. Knoten (100) in einem Netz, "erster Knoten" genannt, welcher dafür ausgelegt ist, eine Überlastinformation in Bezug auf einen ersten Datenstrom, der von einem zweiten Knoten gesendet wird, zu signalisieren, wobei der erste Datenstrom und wenigstens ein zweiter Datenstrom von dem ersten Knoten geleitet werden, umfassend:
- ein Verarbeitungsmodul (104), das dafür ausgelegt ist, eine Überlastinformation in Bezug auf den zweiten Datenstrom zu gewinnen, wobei die Überlastinformation anzeigt, dass ein dritter Knoten, mittels dessen der erste Datenstrom geleitet wird, eine Überlastsituation für ein Leiten dieses zweiten Stroms in einer Datenübertragungsebene erkannt hat;
- ein Überprüfungsmodul (106), das dafür ausgelegt ist zu überprüfen, ob der erste Datenstrom eine Prioritätsebene aufweist, die niedriger als diejenige des zweiten Datenstroms ist, **gekennzeichnet durch**:
- ein Steuerungsmodul (108), das dafür ausgelegt ist, an den zweiten Knoten eine Steuerungsnachricht in einer Steuerungsebene zu senden, wobei die Steuerungsnachricht die Überlastinformation transportiert.

8. System zur Signalisierung einer Überlastinformation, das dafür ausgelegt ist, eine Überlastinformation in Bezug auf einen ersten Datenstrom, der von einem ersten Knoten (N1) gesendet wird, zu signalisieren, wobei der erste Datenstrom und wenigstens ein zweiter Datenstrom von einem zweiten Knoten (N2) geleitet werden, wobei das System umfasst:
- den ersten Knoten (N1), der ein Sendemodul, das dafür ausgelegt ist, Datenpakete über den ersten Strom zu senden, und ein Empfangsmodul, das dafür ausgelegt ist, von dem zweiten Knoten eine Signalisierung einer Überlastinformation zu empfangen, umfasst;
- den zweiten Knoten (N2), der gemäß Anspruch 7 ausgelegt ist;
- einen dritten Knoten (N3), mittels dessen der erste Datenstrom geleitet wird, wobei der dritte Knoten ein Markierungsmodul umfasst, das dafür ausgelegt ist, Datenpakete zu markieren, die sich auf eine Überlastsituation beziehen, für ein Leiten des zweiten Stroms in einer Datenübertragungsebene.

9. Programm für einen Knoten, welches Programmcodeanweisungen umfasst, die dazu bestimmt sind, die Ausführung der Schritte des Verfahrens nach einem der Ansprüche 1 bis 6 zu steuern, wenn das Programm von dem Knoten ausgeführt wird.

10. Von einem Knoten lesbares Aufzeichnungsmedium, auf welchem das Programm nach Anspruch 9 aufgezeichnet ist.

## Claims

1. Method for signaling a piece of congestion information (C1) relating to a first data stream (F1) transmitted by a first node (N1) in a network, said method comprising the following steps implemented by a second node (N2), by means of which the first data stream (F1) and at least one second data stream (F2-F3) are conveyed:
- obtaining (E1) a piece of congestion information relating to the second data stream (F2), said piece of congestion information indicating that a third node (N3), by means of which the first data stream is conveyed, has detected a congestion situation for conveyance of said second stream in a data transfer plane;
- verifying (E3) that the first data stream has a priority level lower than that of the second data stream, **characterized by**:
- sending (E4) a control message (M1-M2) in a command plane to the first node transmitting the first stream, said control message carrying said piece of congestion information.

2. Signaling method according to Claim 1, moreover comprising a step of obtaining (E2) an identifier of the first node from a data packet belonging to the first stream.

3. Signaling method according to Claim 1, in which said piece of congestion information is obtained from a data packet belonging to the second stream.

4. Signaling method according to Claim 1, in which said piece of congestion information is obtained in a command plane from a control message carrying said piece of congestion information.

5. Signaling method according to Claim 1, moreover comprising an observation step after the piece of congestion information is sent, at the end of which when the congestion situation is extended to the third node, the verification and sending steps are repeated for a third stream transmitted by a fourth node.

6. Signaling method according to Claim 1, in which the priority level belongs to a group comprising a priority level associated with a data stream, a priority level associated with a transmitter of a data stream, a priority level associated with a user receiving a data stream, a priority level associated with a communication protocol for a data stream, a priority level associated with an application managing a data stream.

7. Node (100) in a network, referred to as "first node", designed to signal a piece of congestion information relating to a first data stream transmitted by a second node, the first data stream and at least one second data stream being conveyed by said first node, comprising:
- a processing module (104) designed to obtain a piece of congestion information relating to the second data stream, said piece of congestion information indicating that a third node, by means of which the first data stream is conveyed, has detected a congestion situation for conveyance of said second stream in a data transfer plane;
- a verification module (106) designed to verify that the first data stream has a priority level lower than that of the second data stream, **characterized by**:
- a control module (108) designed to send a control message in a command plane to said second node, said control message carrying said piece of congestion information.

8. System for signaling a piece of congestion information, designed to signal a piece of congestion information relating to a first data stream transmitted by a first node (N1), the first data stream and at least one second data stream being conveyed by a second node (N2), said system comprising:
- said first node (N1), comprising a sending module designed to send data packets via said first stream, and a reception module designed to receive signaling for a piece of congestion information from said second node;
- said second node (N2) being designed according to Claim 7;
- a third node (N3), by means of which the first data stream is conveyed, said third node comprising a marking module designed to mark data packets relating to a congestion situation for conveyance of said second stream in a data transfer plane.

9. Program for a node, comprising program code instructions intended to control the execution of the steps of the method according to one of Claims 1 to 6 when said program is executed by said node.

10. Recording medium that can be read by a node, on which the program according to Claim 9 is recorded.
